# EUROPEAN PATENT APPLICATION

(11) **EP 3 413 559 A1**
(43) Date of publication of application: **12.12.2018**
(21) Application number: 17174495.6
(22) Date of filing: 06.06.2017
(51) Int. Cl.: H04N 7/18, B60R 1/00

(54) **VEHICLE IMAGE RECORDING APPARATUS AND METHOD OF OPERATING A VEHICLE CAMERA**

(71) Applicant: Alpine Electronics, Inc., Tokyo (JP)
(72) Inventor: Loebbert, Johannes, 70567 Stuttgart (DE)
(74) Representative: Schmitt-Nilson Schraud Waibel Wohlfrom Patentanwälte Partnerschaft mbB

(57) **Abstract**

A vehicle image recording apparatus (10) comprises a vehicle camera (13) for capturing at least one image of an environment (4) proximate to the vehicle (1), a position determining device (17) for determining a current position associated with the vehicle (1) and a jurisdiction associated with the current position, and a processing device (14) which is configured to retrieve data from a restriction data storage device (20, 30) indicative of at least one admissible mode of operation or limitation of use of the vehicle camera (13) in the determined jurisdiction. The processing device (14) is configured to determine from the retrieved data one of different operation modes of the vehicle camera (13) and to control an operation of the vehicle camera (13) according to the determined one of the different operation modes which include an unlimited use mode, a restricted use mode, and a log mode of the vehicle camera in which storing of images of the vehicle camera within a defined time period with respect to an event is allowed. A user information device (15) is configured to provide information to a user which is indicative of the determined operation mode and controlled operation of the vehicle camera (13).

## Description

The present disclosure relates to a vehicle image recording apparatus and a method of operating a vehicle camera configured and arranged to capture at least one image of an environment proximate to the vehicle. Further, the invention relates to a vehicle comprising such vehicle image recording apparatus.

In some applications, it is common that drivers place a camera on or inside a vehicle to record their driving route or to record other videos of a trip and/or any events in the vehicle's environment during driving. One possibility for placing a camera with respect to a vehicle is mounting it outside or inside the vehicle, e.g. on a surface of a dashboard of the vehicle, such as in proximity of the front windshield. Such vehicle cameras may also be fixedly installed and record what is, e.g., in front of the car. Such kind of cameras to be placed or installed on a dashboard of a vehicle (often called abbreviated "dash cam") are commercially available and in use. Some dash cams even have a GPS receiver to detect and record the current location.

There may be a situation in which the user has to keep track about any legal restrictions when operating such vehicle camera in a current jurisdiction, such as the particular country in which the vehicle is currently positioned. There are countries in which the use of such vehicle cameras during driving is completely forbidden and the user has to remove the camera before entering the country. Otherwise the camera might be confiscated by law enforcement and the user might have to pay a penalty. In this regard, law enforcement might not accept an explanation from the end user that the camera was switched off and not in use.

JP 2007-282017 A discloses a portable communication terminal comprising a radio interface, a picture photographing function, a memory and a control unit. The control unit acquires use limit information of the picture photographing function from an information source through the radio interface, stores the use limit information in the memory in one-to-one correspondence with position information, and further divides the use limit information into a plurality of limit conditions by use modes for the picture photographing functions. The control unit acquires position information via the radio interface and forbids the use of the picture photographing function in accordance with the limit conditions by use modes for the use limit information corresponding to the position information.

It is an object of the present invention to provide a vehicle image recording apparatus and a method of operating a vehicle camera configured and arranged to capture at least one image of an environment proximate to the vehicle which helps the user to operate a vehicle camera in accordance with applicable restriction requirements of a country in which the vehicle is currently located.

The present invention is related to a vehicle image recording apparatus and a method of operating a vehicle camera according to the independent claims.

According to an aspect, there is provided a vehicle image recording apparatus, comprising a vehicle camera configured and arranged to capture at least one image of an environment proximate to the vehicle, a position determining device for determining a current position associated with the vehicle and a jurisdiction associated with the current position, and a processing device coupled with the vehicle camera and the position determining device, and which is configured to retrieve data from a restriction data storage device which is indicative of at least one admissible mode of operation or limitation of use of the vehicle camera in the determined jurisdiction associated with the current position. The processing device is configured to determine from the retrieved data one of different operation modes of the vehicle camera and to control an operation of the vehicle camera according to the determined one of the different operation modes. The different operation modes include at least an unlimited use mode of the vehicle camera, a restricted use mode of the vehicle camera, and a log mode of the vehicle camera in which storing of images of the vehicle camera within a defined time period with respect to an event is allowed. A user information device is configured to provide information to a user which is indicative of the determined operation mode and controlled operation of the vehicle camera.

According to another aspect, there is provided a method of operating a vehicle camera configured and arranged to capture at least one image of an environment proximate to the vehicle, the method comprising:
- determining a current position associated with the vehicle and a jurisdiction associated with the determined current position,
- retrieving data from a restriction data storage device which is indicative of at least one admissible mode of operation or limitation of use of the vehicle camera in the determined jurisdiction associated with the current position,
- determining from the retrieved data one of different operation modes of the vehicle camera and controlling an operation of the vehicle camera according to the determined one of the different operation modes which include an unlimited use mode of the vehicle camera, a restricted use mode of the vehicle camera, and a log mode of the vehicle camera in which storing of images of the vehicle camera within a defined time period with respect to an event is allowed, and
- providing information to a user which is indicative of the determined operation mode and the controlled operation of the vehicle camera.

According to another aspect, there is provided a vehicle comprising a vehicle image recording apparatus according to aspects of the invention.

Advantageously, the vehicle camera, such as a dash cam (a vehicle camera which is configured to be installed on or in a dashboard of the vehicle), can be fixedly installed in the vehicle and does not have to be removed when, e.g., crossing the border between two countries. The vehicle camera can be properly installed in the vehicle so that it cannot be stolen. The end user does not have to consider or check any legal restrictions of vehicle camera use in the respective jurisdiction the vehicle is currently travelling in.

According to an embodiment, in the unlimited use mode the vehicle camera can be freely operated and the user can access images recorded by the vehicle camera. According to another embodiment, in combination therewith or alternatively, in the restricted use mode the operation of the vehicle camera is, at least in part, not allowed. According to another embodiment, in combination with one or both of the above or alternatively, in the log mode, the operation of the vehicle camera is allowed, but recorded images of the vehicle camera are only allowed to be retrieved from the vehicle image recording apparatus in case of an accident and/or only images recorded within a defined time period before an accident as the event are allowed to be stored in the vehicle image recording apparatus.

According to an embodiment, the processing device is configured to control the operation of the vehicle camera automatically according to the determined one of the different operation modes. This provides the advantage that the user is not required to pay attention to and/or to select or confirm the determination made by the processing device.

For example, the determining of the one of different operation modes of the vehicle camera and controlling the operation of the vehicle camera according to the determined one of the different operation modes is performed automatically when the vehicle approaches a border from one jurisdiction to another jurisdiction, in particular a country border.

According to an embodiment, the data retrieved from the restriction data storage device are updated dynamically during a travel of the vehicle. In this way, the vehicle image recording apparatus is always "up to date" without requiring to retrieve the necessary data before start of the travel.

According to an embodiment, the vehicle image recording apparatus further comprising a log data storage device which is configured to store log data which are indicative of the controlled operation of the vehicle camera at least for a defined period of time. Accordingly, the user can prove, for example, to a person, such as the police, that the vehicle camera has been operated according to legal provisions of the respective jurisdiction.

According to an embodiment, the vehicle image recording apparatus further comprises an image data storage device which is configured to store image data recorded within a time period during the log mode of the vehicle camera. Accordingly, image data recorded within a time period during the log mode of the vehicle, such as within a time period before an accident, can be retrieved by the user to prove, for example, a course of events which caused the accident.

According to an embodiment, the processing device is configured to determine an image data usage limitation indicative of an allowed usage of the stored image data, and to control a read out operation mode of the image data storage device according to the determined image data usage limitation. Accordingly, it is possible to prevent the reading out of image data, should that be required according to a specific law provision in a respective jurisdiction.

According to an embodiment, the vehicle image recording apparatus further comprises a memory device which is configured to store a local database of the data retrieved from the restriction data storage device, and the processing device is configured to determine the one of different operation modes of the vehicle camera from data read out from the local database. Advantageously, the processing device can thus determine the one of different operation modes of the vehicle camera locally, e.g., without requiring permanent access, e.g. via the internet, to the restriction data storage device which may be remote from the vehicle (e.g. a central storage server placed a location of a provider).

According to an embodiment, the processing device is configured to update the local database with data retrieved from the restriction data storage device at least by one or a combination of the following: in predetermined intervals, upon occurrence of a change of data stored in the restriction data storage device, via an internet on-demand process performed by the processing device, optionally upon when the position determining device determines that the vehicle approaches a border between two jurisdictions, and/or via coupling with a portable memory device (such as a USB stick or SD card) by user interaction.

According to another embodiment, the vehicle image recording apparatus further comprises the restriction data storage device. That is, the data which is indicative of at least one admissible mode of operation or limitation of use of the vehicle camera in the determined jurisdiction associated with the current position is stored locally in the vehicle image recording apparatus. Thus, the vehicle image recording apparatus can be operated independently without requiring any internet access to a remote server.

According to an embodiment, the processing device is configured to update the data stored in the restriction data storage device at least by one or a combination of the following: in predetermined intervals, via an internet on-demand process performed by the processing device, optionally upon when the position determining device determines that the vehicle approaches a border between two jurisdictions, and/or via coupling with a portable memory device (such as a USB stick or SD card) by user interaction.

According to another aspect, there is provided a computer program product comprising software code sections which are configured to perform a method according to the invention as described herein. In particular, such computer program product and/or the software code sections may be implemented in principle in any processing device on the vehicle or in the camera which is appropriate to perform the respective function. Such processing device may be, for example, implemented in, or part of, a processor of an ECU of the vehicle, of a head unit (HU) of the vehicle, or of the vehicle camera, or may be a separate component (e.g. coupled to the CAN-Bus of the vehicle), or may be a distributed system using one or more processors and/or integrated circuits. The computer program (i.e. the software code sections) may be stored on a computer readable medium.

For example, each one of the position determining device, processing device and user information device may be, at least partially, implemented in hardware and/or in software. Each one or any combination of these may be, for example, implemented in, or part of, an ECU and/or HU of the vehicle or the camera, or may be a separate component (in hardware and/or software), or may be a distributed system (in hardware and/or software) using one or more processors and/or integrated circuits.

The processing device can also be implemented in the housing of vehicle camera, for example in a case in which the camera is installed in the vehicle after manufacture (so-called aftermarket vehicle camera). In such case, for example, the vehicle camera can be coupled by wire or wirelessly with the HU of the vehicle, and/or with the navigation system, and/or only with the map information memory (e.g., if the camera itself has its own GPS sensor) for determining the current position. The processing device may then be a microprocessor implemented in the housing of the camera. The user information device may be a display of the vehicle camera, and/or the vehicle camera may be coupled with the display of the HU. According to an embodiment, the vehicle image recording apparatus can be implemented in the housing of such vehicle camera.

Any features described herein with respect to the apparatus can equally and analogously be implemented in the method as a corresponding step performing a respective function and vice versa.

Exemplary embodiments of the invention are described below with reference to the enclosed Figures.
- Fig.1: is a schematic view of a vehicle including a vehicle image recording apparatus according to an embodiment of the invention,
- Fig. 2: shows a schematic structure of an embodiment of a vehicle image recording apparatus according to the invention,
- Fig. 3: shows a schematic structure of another embodiment of a vehicle image recording apparatus according to the invention.

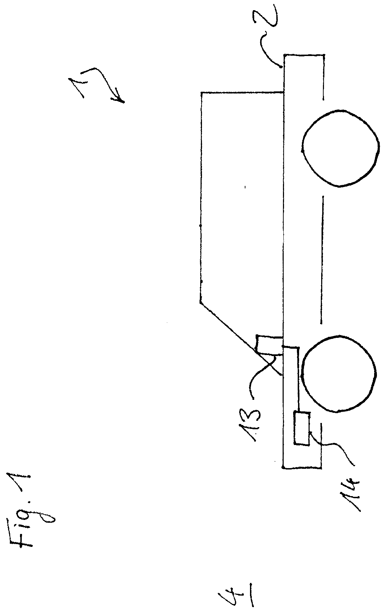

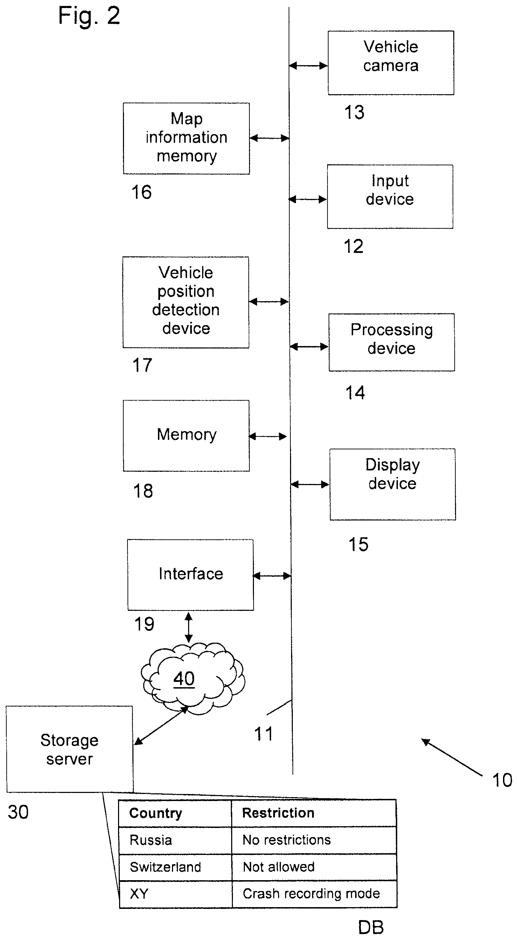

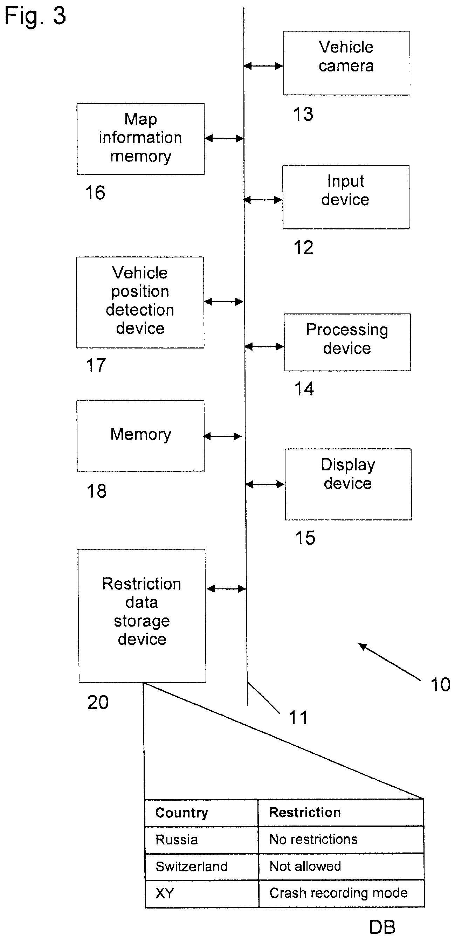

Fig.1 in combination with Fig. 2 and Fig. 3 shows a schematic view of a vehicle including a vehicle image recording apparatus according to embodiments of the invention. The vehicle 1 comprises a vehicle chassis 2 as is known with common vehicles, such as commonly known cars. The vehicle is equipped with a vehicle image recording apparatus 10, embodiments of which are shown in Figs. 2 and 3. The vehicle image recording apparatus 10 comprises a vehicle camera 13, such as a dash cam placed on a dashboard of the vehicle 1. The vehicle camera 13 has a field of view and is configured and arranged to capture at least one sequence of images of an environment 4 proximate to the vehicle 1, e.g. during movement of the vehicle. For example, the camera 13 is placed on the dashboard (the camera 13 may also be at least partly integrated in any other part of the vehicle 1, for example in the roof, as is commonly known in vehicles) to record the driving route (the environment 4 located in front of the vehicle 1) or to record other perspectives of a trip (e.g., any interesting buildings in the surrounding environment 4 of the vehicle 1 in front of or in the periphery of the vehicle 1) when driving with the vehicle. The camera may also be placed outside the vehicle, or at some other location in or on the vehicle. The sequence of images captured by the camera 13 may form a continuous video stream, or may be individual images taken at different points of time during driving, or a combination of both. As is common with digital cameras, a captured image comprises image data which are included in a so-called image frame.

Fig. 2 shows a schematic block diagram illustrating a possible structure of an embodiment of the vehicle image recording apparatus according to the invention. In the present embodiment, the vehicle image recording apparatus 10 may be implemented in a head unit (HU) of the vehicle and/or may be, at least partially, a part of a navigation system. It includes a processing device 14, such as a microprocessor which may be structured as a CPU (central processing unit), for controlling the overall operation of the HU, vehicle image recording apparatus and/or navigation system and for processing any data, such as map data, received from components of the vehicle. A display device 15 may include a display screen, such as a touch screen, and may be configured for displaying information on the display screen, such as a map image and/or a list of information. The display device 15 interacts with the processing device 14 for generating and displaying images based on the data processed and provided by the processing device 14.

The vehicle image recording apparatus 10 or HU, respectively, may further comprise a data bus 11 which is under the control of the processing device 14 for connecting and communication of the components of the vehicle image recording apparatus 10 with each other. Via the data bus 11, which can be an internal data communication bus or a CAN bus of the vehicle, the processing device 14 is further coupled with a map information memory 16 which is a data storage device for storing map data to be processed. For example, the map data include geographic information including information on jurisdiction (such as country) in which the vehicle is currently travelling in and a plurality of POIs (points of interest), such as filling stations, restaurants, hotels, etc.

The processing device 14 may process the map data provided from the map information memory 16, e.g. for route searching and/or for generating a list of POIs related to the current vehicle position. It is further configured to operate the vehicle camera 13 (which may include its own processor device) and retrieve data therefrom, and for providing information to the user which is indicative of a determined operation mode and controlled operation of the vehicle camera 13, as set out in more detail below.

The vehicle image recording apparatus 10 or HU, respectively, further comprises a vehicle position detection device 17, such as a GPS sensor, for detecting and determining the current vehicle position. As such, the vehicle position detection device 17 implements the position determining device according to the present invention. The position determining device may also be implemented, at least in part, with the processing device 14 processing any map data received from the map information memory 16 and any detection signal received from a GPS sensor, or may be implemented in the vehicle camera itself determining the camera position, which is associated with the vehicle as the vehicle camera is installed in the vehicle.

Any retrieved and/or processed data, such as any searched route(s) to a destination and/or camera images recorded by the vehicle camera 13, may be at least temporarily stored in a memory 18 for access by the processing device 14 and/or any other component of the HU.

An input device 12 is capable of receiving users' instructions for operating the vehicle image recording apparatus 10 or HU, respectively. It may comprise, for example, a touch input device, such as a touch pad device or touch screen device, and/or a port for receiving a portable memory device, such as a commonly known USB stick or SD card, so that data can be written to, or retrieved from, the portable memory device from and to the vehicle image recording apparatus 10. In a particular embodiment, if the display device 15 comprises at least in part a touch screen device, it may also serve at least in part as an input device 12.

The vehicle camera 13 is operable in different operation modes. For example, the vehicle camera 13 is operated and controlled by the processing device 14, in which software code sections are implemented, or processed, according to which the vehicle camera 13 may be operated only in one of different operation modes.

For example, the different operation modes include an unlimited use mode of the vehicle camera, a restricted use mode of the vehicle camera, and a log mode of the vehicle camera in which storing of images of the vehicle camera within a defined time period with respect to an event is allowed. The vehicle camera 13 may also be operable in any further operation modes apart from the ones described above.

According to an embodiment, in the unlimited use mode the vehicle camera 13 can be operated without any imposed limitations and the user can access images recorded by the vehicle camera 13. Accordingly, the processing device 14 allows operation of the vehicle camera according to any user input from the input device 12 which is in compliance with the camera functions.

According to another embodiment, in combination therewith or alternatively, in the restricted use mode the operation of the vehicle camera 13 is, at least in part, not allowed. For example, only display of functions of the camera and/or proof reading of past camera operations may be allowed. For example, the processing device 14 prevents an image capturing and/or recording operation of the vehicle camera 13, for capturing of images or recording of images, in the restricted use mode.

According to another embodiment, in combination with one or both of the above or alternatively, in the log mode, the operation of the vehicle camera 13 is allowed, but recorded images of the vehicle camera 13 are only allowed to be retrieved from the vehicle image recording apparatus 10 in case of an accident and/or only images recorded within a defined time period before the accident are allowed to be stored in the vehicle image recording apparatus 10. Accordingly, the processing device 14 deletes, or does not store, any image data outside this defined time period in the memory 18.

In the following, an operation of the vehicle image recording apparatus 10 according to embodiments of the invention is described.

For example, during driving of the vehicle 1, the processing device 14 and/or vehicle position detection device 17 determines a current position of the vehicle and jurisdiction in which the vehicle is currently travelling, e.g. from map data provided by the map information memory 16. According to the embodiment of Fig. 2, the processing device 14 retrieves data from a restriction data storage device 30 which stores data indicative of at least one admissible mode of operation or limitation of use of the vehicle camera 13 in the determined jurisdiction. For example, the restriction data storage device 30 is a remote storage server in which a database DB is stored and updated by a provider (for example, in interaction with an authority of a respective country). For example, the database DB stores data that an operation of the vehicle camera is not allowed in a particular country, and/or that a vehicle camera can be freely used in another country. In a third country, for example, an operation according to a "crash recording mode" (in case of an accident, as described above) is allowed.

According to an embodiment, the data from the storage server 30 may be retrieved by the processing device 14 via the internet 40, wherein the processing device 14 may access the internet 40 through an appropriate interface 19, such as a mobile network access device usable in vehicles, as commonly known in the art.

Advantageously, a local database of the data retrieved from the storage server 30 may be stored in the memory 18, so that a permanent access to the storage server 30 through a permanent online-internet connection is not necessary. Accordingly, the processing device determines respective operation modes of the vehicle camera 13 from data read out from the local database stored in the memory 18.

For example, the local database stored in the memory 18 may be updated with data retrieved from the storage server 30 in predetermined intervals (e.g. every one or two days), and/or upon occurrence of a change of data stored in the storage server 30 (e.g. when a provision has changed in a country). An update may be performed via an internet on-demand process performed by the processing device 14, for example upon when it is determined that the vehicle 1 approaches a border between two jurisdictions. An update may also be performed via the user himself, e.g. via coupling by user interaction with a portable memory device (such as a USB stick) with updated data stored thereon.

The processing device 14 determines from the data retrieved from the storage server 30 one of the different operation modes of the vehicle camera 13. For example, the processing device 14 determines that the vehicle 1 is travelling in country XY, in which only a particular log mode (such as the "crash recording mode", as mentioned above) of the vehicle camera 13 is allowed, and accordingly determines from the retrieved data of the restriction data storage device 30 for country XY that the vehicle camera 13 can be operated in the log mode (here the "crash recording mode"). Upon a corresponding user instruction, for example, the processing device 14 then controls an operation of the vehicle camera 13 according to the determined one of the different operation modes, here the log mode. In other countries, such as Russia for example, the vehicle camera can be freely used (no restrictions of camera use), whereas in Switzerland, for example, the use of the vehicle camera is not allowed at all.

The processing device 14 then sends corresponding instructions to the display device 15 which is configured to provide information to the user indicative of the determined operation mode and controlled operation of the vehicle camera 13. For example, the display device indicates by text message or light indications that the vehicle camera 13 is currently operated in the log mode, or indicates by text message that the vehicle camera 13 has been operated in the log mode at a particular period of time. Such information can be retrieved or read by any authorized persons, such as officers of the country XY when checking the vehicle and camera 13 for proper use, so that the user of the vehicle 1 can easily prove proper use of the vehicle camera 13 upon request.

Advantageously, the processing device controls the operation of the vehicle camera 13 automatically according to the respective determined operation mode. For example, if the vehicle approaches a border from one jurisdiction to another jurisdiction, such as a country border, the determination of the respective operation mode of the vehicle camera 13 and control of the operation of the vehicle camera 13 according to the determined operation mode is performed automatically by the processing device 14 when the vehicle approaches or crosses the border.

According to an embodiment, the memory 18 may also serve as a log data storage device 18 for storing log data which are indicative of the controlled operation of the vehicle camera 13 at least for a defined period of time. For example, the memory stores log data which indicate that the vehicle camera 13 has been operated for the last 30 seconds before an accident of the vehicle 1 and images of that time period are stored in the memory 18 (or on another storage device) and can be retrieved therefrom. Accordingly, the memory 18 can also serve as an image data storage device which stores image data recorded within such time period during the log mode of the vehicle camera 13.

The processing device 14, according to an embodiment, may also determine an image data usage limitation which is indicative of an allowed usage of the stored image data. For example, it may determine that the stored image data may be retrieved and freely used by the user. A control of a read out operation mode of the memory 18 may be performed accordingly by the processing device 14 according to the determined image data usage limitation.

According to the embodiment of Fig. 3, the processing device 14 retrieves data from a restriction data storage device 20, which is comprised in the vehicle image recording apparatus 10, or HU, respectively. That is, different from the embodiment according to Fig. 2, the data indicative of at least one admissible mode of operation or limitation of use of the vehicle camera 13 in the determined jurisdiction (i.e. stored in the database DB) are stored locally in the restriction data storage device 20, which may be a separate memory device, or may be a part of the memory device 18 or map information memory 16. In this embodiment, thus, no or no frequent connection to a remote server via an internet access device is required. In other respects, the embodiment according to Fig. 3 corresponds to the one described with respect to Fig. 2.

For example, the data in the local restriction data storage device 20 may be updated, e.g., by the user or a car service provider in regular or irregular intervals, e.g. when updating the map data in map information memory 16. Such update may be performed via an internet on-demand process performed by the processing device 14, for example upon when the vehicle 1 approaches a border between two jurisdictions. An update may also be performed by the user himself, e.g. via coupling with a portable memory device such as a USB stick.

The data stored in the restriction data storage devices 20 or 30 may be implemented, for example, in a XML table programmed appropriately. The database DB stored in the restriction data storage devices 20 or 30 may be a positive list designating an allowed use or mode of operation in the respective jurisdiction (i.e. is indicative of at least one admissible mode of operation of the vehicle camera 13 in the respective jurisdiction) or may be a negative list designating a limitation of use or restricted mode of operation (i.e. is indicative of at least one limitation of use of the vehicle camera 13 in the respective jurisdiction), or a combination of both.

## Claims

1. Vehicle image recording apparatus (10), comprising
- a vehicle camera (13) configured and arranged to capture at least one image of an environment (4) proximate to the vehicle (1),
- a position determining device (17) for determining a current position associated with the vehicle (1) and a jurisdiction associated with the determined current position,
- a processing device (14) coupled with the vehicle camera (13) and the position determining device (17), and which is configured to retrieve data from a restriction data storage device (20, 30) which is indicative of at least one admissible mode of operation or limitation of use of the vehicle camera (13) in the determined jurisdiction associated with the current position,
- wherein the processing device (14) is configured to determine from the retrieved data one of different operation modes of the vehicle camera (13) and to control an operation of the vehicle camera (13) according to the determined one of the different operation modes which include an unlimited use mode of the vehicle camera, a restricted use mode of the vehicle camera, and a log mode of the vehicle camera in which storing of images of the vehicle camera within a defined time period with respect to an event is allowed, and
- a user information device (15) which is configured to provide information to a user which is indicative of the determined operation mode and controlled operation of the vehicle camera (13).

2. Vehicle image recording apparatus according to claim 1, wherein the processing device (14) is configured to control the operation of the vehicle camera (13) automatically according to the determined one of the different operation modes.

3. Vehicle image recording apparatus according to claim 1 or 2, further comprising a log data storage device (18) which is configured to store log data which are indicative of the controlled operation of the vehicle camera (13) at least for a defined period of time.

4. Vehicle image recording apparatus according to one of claims 1 to 3, further comprising an image data storage device (18) which is configured to store image data recorded within a time period during the log mode of the vehicle camera (13).

5. Vehicle image recording apparatus according to claim 4, wherein the processing device (14) is configured to determine an image data usage limitation indicative of an allowed usage of the stored image data, and to control a read out operation mode of the image data storage device (18) according to the determined image data usage limitation.

6. Vehicle image recording apparatus according to one of claims 1 to 5, further comprising a memory device (18) which is configured to store a local database of data retrieved from the restriction data storage device (30), and the processing device (14) is configured to determine the one of different operation modes of the vehicle camera (13) from data read out from the local database.

7. Vehicle image recording apparatus according to claim 6, wherein the processing device (14) is configured to update the local database with data retrieved from the restriction data storage device (30) at least by one of the following:
- in predetermined intervals,
- upon occurrence of a change of data stored in the restriction data storage device (30),
- via an internet on-demand process performed by the processing device (14), particularly upon when the position determining device (17) determines that the vehicle (1) approaches a border between two jurisdictions,
- via coupling with a portable memory device by user interaction.

8. Vehicle image recording apparatus according to one of claims 1 to 7, further comprising the restriction data storage device (20).

9. Vehicle image recording apparatus according to claim 8, wherein the processing device (14) is configured to update the data stored in the restriction data storage device (20) at least by one of the following:
- in predetermined intervals,
- via an internet on-demand process performed by the processing device (14), particularly upon when the position determining device (17) determines that the vehicle (1) approaches a border between two jurisdictions,
- via coupling with a portable memory device by user interaction.

10. Vehicle image recording apparatus according to one of claims 1 to 9, wherein
- in the unlimited use mode, the vehicle camera can be freely operated and the user can access images recorded by the vehicle camera, and/or
- in the restricted use mode, the operation of the vehicle camera is, at least in part, not allowed, and/or
- in the log mode, the operation of the vehicle camera is allowed, but recorded images of the vehicle camera are only allowed to be retrieved from the vehicle image recording apparatus in case of an accident and/or only images recorded within a defined time period before the accident as the event are allowed to be stored in the vehicle image recording apparatus.

11. A vehicle (1) comprising a vehicle image recording apparatus (10) according to one of the preceding claims.

12. A method of operating a vehicle camera (13) configured and arranged to capture at least one image of an environment (4) proximate to the vehicle (1), the method comprising:
- determining a current position associated with the vehicle (1) and a jurisdiction associated with the determined current position,
- retrieving data from a restriction data storage device (20, 30) which is indicative of at least one admissible mode of operation or limitation of use of the vehicle camera (13) in the determined jurisdiction associated with the current position,
- determining from the retrieved data one of different operation modes of the vehicle camera (13) and controlling an operation of the vehicle camera (13) according to the determined one of the different operation modes which include an unlimited use mode of the vehicle camera, a restricted use mode of the vehicle camera, and a log mode of the vehicle camera in which storing of images of the vehicle camera within a defined time period with respect to an event is allowed, and
- providing information to a user which is indicative of the determined operation mode and the controlled operation of the vehicle camera (13).

13. The method according to claim 12, wherein the determining of the one of different operation modes of the vehicle camera (13) and controlling the operation of the vehicle camera (13) according to the determined one of the different operation modes is performed automatically when the vehicle approaches a border from one jurisdiction to another jurisdiction, in particular a country border.

14. The method according to one of claims 12 or 13, wherein the data retrieved from the restriction data storage device (20, 30) are updated dynamically during a travel of the vehicle (1).

15. A computer program product comprising software code sections which are configured to perform a method according to one of claims 12 to 14.
